# EUROPEAN PATENT SPECIFICATION

(11) **EP 4 120 172 B1**
(45) Date of publication and mention of the grant of the patent: **22.10.2025**
(21) Application number: 22184542.3
(22) Date of filing: 12.07.2022
(51) Int. Cl.: G06Q 30/02, G06Q 50/40, B60W 60/00

(54) **REAL TIME EVENT TRIGGERED FEEDBACK FOR AUTONOMOUS VEHICLES**
ECHTZEITEREIGNISGESTEUERTE RÜCKKOPPLUNG FÜR AUTONOME FAHRZEUGE
RÉTROACTION DÉCLENCHÉE PAR ÉVÉNEMENT EN TEMPS RÉEL POUR VÉHICULES AUTONOMES

(30) Priority: 15.07.2021 US 202163222277 P; 23.08.2021 US 202117408643
(43) Date of publication of application: 18.01.2023
(73) Proprietor: WAYMO LLC, Mountain View, CA 94043 (US)
(72) Inventor: VAN DER LOWE, Ilmo, Mountain View, 94043 (US); WRIGHT, Clement, Mountain View, 94043 (US); KAMAT, Priya, Mountain View, 94043 (US)
(74) Representative: Chettle, John Edward

(56) References cited:
- US-A1- 2018 365 740
- US-A1- 2019 047 584
- US-A1- 2020 156 660

## Description

### CROSS REFERENCE TO RELATED APPLICATIONS

The present application claims the benefit of the filing date of U.S. Provisional Application No. 63/222,277, filed July 15, 2021, and U.S. Utility Application No. 17/408,643, filed August 23, 2021.

### BACKGROUND

Autonomous vehicles, such as vehicles that do not require a human driver, can be used to aid in the transport of passengers or items from one location to another. Such vehicles may operate in a fully autonomous mode where users may provide some initial input, such as a pickup or destination location, and the vehicle maneuvers itself to that location. When a person (or user) wants to be physically transported and/or to transport goods between two locations via a vehicle, they may use any number of taxi or delivery services. To date, these services typically involve a human driver who is given dispatch instructions to a location to pick up and drop off the user and/or goods. In some instances, a passenger is provided with an opportunity to "rate" his or her overall experience with the ride service, for instance, by providing a tip to the driver and/or star or other rating. United States Patent Application Publication No. US 2019/0047584 A1 presents systems and method for adjusting autonomous vehicle parameters in response to passenger feedback. United States Patent Application Publication No. US 2018/0365740 A1 presents systems and methods to obtain autonomous vehicle passenger feedback.

### BRIEF SUMMARY

One aspect of the disclosure provides a method of collecting feedback from passengers of autonomous vehicles. The method includes determining, by one or more processors of a feedback system of the autonomous vehicles, that a triggering circumstance for triggering a feedback request has been met, the triggering circumstance including one or more of a driving event, a presence of other road users, or a trip state; based on the determining, by the one or more processors, identifying a display requirement and data collection parameters for the feedback request, wherein the display requirement defines when the feedback request is displayed and the data collection parameters identify the information that the feedback request is to collect; providing, by the one or more processors, the feedback request for display based on the display requirement and data collection parameters; receiving, by the one or more processors, in response to the providing, feedback from a passenger of the autonomous vehicle; and storing, by the one or more processors, the feedback for later use.

In one example, the driving event includes disengages from an autonomous driving mode to a manual driving mode. In another example, the presence of other road users includes a predefined number of pedestrians. In another example, the presence of other road users includes a predefined number of bicyclists. In another example, the trip state includes time from a pickup of the passenger. In another example, the trip state includes time from a drop off of the passenger. In another example, the triggering circumstance further includes a rider lifecycle requirement. In this example, the rider lifecycle requirement includes whether the passenger is on a particular ride number. In addition or alternatively, the rider lifecycle requirement includes whether the passenger has made a particular number of rides in a week. In addition or alternatively, the rider lifecycle requirement includes whether the passenger has had a predefined amount of time between rides. In addition or alternatively, the rider lifecycle requirement includes whether a predefined number of weeks since a first ride. In another example, the triggering circumstance further includes a support interaction requirement. In the invention, the display requirement defines a delay time between the triggering circumstance having been met and displaying the feedback request. In another example, the display requirement includes a vehicle action which must occur before the feedback request is displayed. In another example, the method also includes, based on the determining, identifying a priority for the feedback request, and the priority corresponds to an inverse of a frequency with which the triggering circumstance is likely to occur. In this example, the method also includes using a priority of the feedback request to determine when to display the feedback request. In another example, the providing includes providing for display on a display of the autonomous vehicle. In another example, the providing includes providing for display on a display of a client computing device associated with the passenger. In another example, the method also includes, based on the determining, identifying a frequency limit for the feedback request, and the providing is further based on the frequency limit. In this example, the frequency limit includes a fixed maximum number of feedback requests displayed during a trip.

### BRIEF DESCRIPTION OF THE DRAWINGS

FIGURE 1 is a functional diagram of an example vehicle in accordance with an exemplary embodiment.
FIGURE 2 is an example external view of a vehicle in accordance with aspects of the disclosure.
FIGURE 3 is a functional diagram of an example system in accordance with aspects of the disclosure.
FIGURE 4 is a pictorial diagram of an example system in accordance with aspects of the disclosure.
FIGURE 5 is a functional diagram of the system of FIGURE 4 in accordance with aspects of the disclosure.
FIGURES 6A-H are an example representation of a display and displayed information in accordance with aspects of the disclosure.
FIGURES 7A-D are an example representation of a display and displayed information in accordance with aspects of the disclosure.
FIGURE 8 is an example flow diagram in accordance with aspects of the disclosure.

### DETAILED DESCRIPTION

### OVERVIEW

The technology relates to collecting feedback from passengers during trips involving autonomous vehicles. While some feedback systems may request feedback from a user once a task is completed, for instance, after a trip has been completed, this may not always capture the most useful feedback in a timely manner. In order to enable real time feedback, human operators ("internal stakeholders") must first define a feedback request. Each feedback request may include three primary features: triggering circumstances, display requirements, and data collection parameters.

The triggering circumstances may include requirements such as driving events, presence or actions of other road users, trip state, roadgraph requirements, support interactions, user generated/initiated feedback, passenger lifecycle, time of day, other driving conditions, or combinations of these at once, over a predetermined period of time or a predetermined number of times. Road graph requirements may include certain types of intersections, unprotected turns, narrow streets, construction zones, disengage zones (where the autonomous vehicle will automatically disengage from an autonomous driving mode to a manual driving mode, or areas where pullovers are disallowed) etc. Display requirements may define when a feedback request is to be displayed in order to capture the most useful feedback in a timely manner.

The data collection parameters may identify the information that the feedback request is to collect or rather, define the parameters for the information to be input into the feedback system. In some instances, the data collection parameters of a feedback request may also differ based on the type of passenger and/or lifecycle.

Assuming a feedback request meets internal requirements for quality and usefulness (e.g. some internal standards), the feedback request may be assigned a priority. In one instance, the priority corresponds to the inverse of a frequency with which the triggering circumstance is likely to occur. As another instance, the priority may correspond to the need for a particular type of data regardless of the frequency.

The triggering circumstances, display requirements, and data collection parameters may be stored in a lookup table, database or other storage system which allows one or more computing devices of a feedback system of an autonomous vehicle to determine exactly when triggering circumstances have been met and then to identify any corresponding display requirements and data collection parameters.

The computing devices of the feedback system may monitor information from various systems of the autonomous vehicle. For instance, the computing devices of the feedback system may constantly analyze roadgraph features and location information from the autonomous vehicle's positioning system, route and trajectory features from the autonomous vehicle's planning system, detected objects and characteristics from the autonomous vehicle's perception systems, as well as behavior predictions from the autonomous vehicle's behavior modeling system, etc. Based on this, the feedback system may determine when a triggering circumstance occurs.

Once a triggering circumstance occurs, the computing devices of the feedback system can generate and display an interface for the user. This can be displayed on a display of the vehicle or potentially the user's phone with or without an audible notification and according to the display requirement for that feedback request. When there are multiple feedback requests at once, the priority may allow the feedback system to select the most important of those requests to display to the user, at the expense of the other requests.

Feedback results may be received and stored for later analysis and/or automatically transmitted to a fleet management system for storage and later analysis. For instance, a triage team may review the feedback and create a notification for the human operator who initially requested the feedback or another entity. In addition, the triage team may be more quickly/effectively able to root cause the issue given an accurate timestamp of when it occurred. In some instances, the feedback may be used in real time to affect driving behaviors of the autonomous vehicles.

The features described herein may allow autonomous vehicles to collect feedback from passengers in real time as events which are important to stakeholders are occurring. As a result, feedback may be more accurate and even more useful as it is not simply collected after a trip has been completed. For instance, passengers will have just experienced the event so will have a better memory of it than later in the trip. In addition, other negative or positive events later in a ride will not affect the passenger's feedback for the current event. Moreover, some passengers may have a better experience if they are asked for feedback a few times over the course of a ride as compared to several questions all at once at the end of a ride (when the passenger may be less likely to recall the answers correctly).

### EXAMPLE SYSTEMS

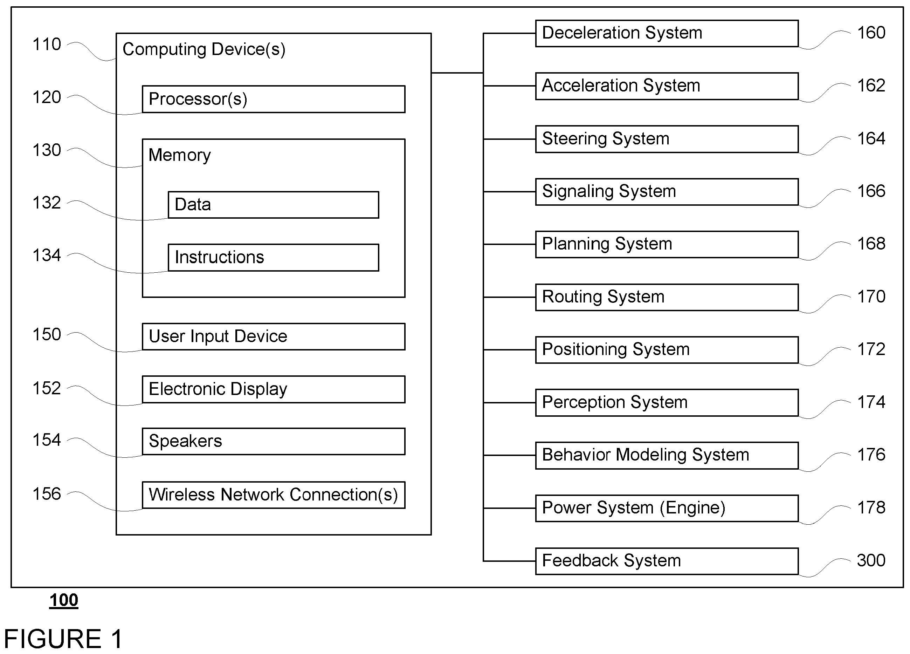

As shown in FIGURE 1, an autonomous vehicle 100 in accordance with one aspect of the disclosure includes various components. While certain aspects of the disclosure are particularly useful in connection with specific types of vehicles, the vehicle may be any type of vehicle including, but not limited to, cars, trucks, motorcycles, buses, recreational vehicles, etc. The vehicle may have one or more computing devices, such as computing device 110 containing one or more processors 120, memory 130 and other components typically present in general purpose computing devices.

The memory 130 stores information accessible by the one or more processors 120, including data 132 and instructions 134 that may be executed or otherwise used by the processor 120. The memory 130 may be of any type capable of storing information accessible by the processor, including a computing device or computer-readable medium, or other medium that stores data that may be read with the aid of an electronic device, such as a hard-drive, memory card, ROM, RAM, DVD or other optical disks, as well as other write-capable and read-only memories. Systems and methods may include different combinations of the foregoing, whereby different portions of the instructions and data are stored on different types of media.

The instructions 134 may be any set of instructions to be executed directly (such as machine code) or indirectly (such as scripts) by the processor. For example, the instructions may be stored as computing device code on the computing device-readable medium. In that regard, the terms "instructions" and "programs" may be used interchangeably herein. The instructions may be stored in object code format for direct processing by the processor, or in any other computing device language including scripts or collections of independent source code modules that are interpreted on demand or compiled in advance. Functions, methods and routines of the instructions are explained in more detail below.

The data 132 may be retrieved, stored or modified by processor 120 in accordance with the instructions 134. For instance, although the claimed subject matter is not limited by any particular data structure, the data may be stored in computing device registers, in a relational database as a table having a plurality of different fields and records, XML documents or flat files. The data may also be formatted in any computing device-readable format.

The one or more processor 120 may be any conventional processors, such as commercially available CPUs or GPUs. Alternatively, the one or more processors may be a dedicated device such as an ASIC or other hardware-based processor. Although FIGURE 1 functionally illustrates the processor, memory, and other elements of computing device 110 as being within the same block, it will be understood by those of ordinary skill in the art that the processor, computing device, or memory may actually include multiple processors, computing devices, or memories that may or may not be stored within the same physical housing. For example, memory may be a hard drive or other storage media located in a housing different from that of computing device 110. Accordingly, references to a processor or computing device will be understood to include references to a collection of processors or computing devices or memories that may or may not operate in parallel.

Computing devices 110 may include all of the components normally used in connection with a computing device such as the processor and memory described above as well as a user input device 150 (e.g., one or more button, mouse, keyboard, touch screen and/or microphone), various electronic displays (e.g., a monitor having a screen or any other electrical device that is operable to display information), and speakers 154 to provide information to a passenger of the autonomous vehicle 100 or others as needed. For example, electronic display 152 may be located within a cabin of the autonomous vehicle 100 and may be used by computing devices 110 to provide information to passengers within the autonomous vehicle 100.

Computing devices 110 may also include one or more wireless network connections 156 to facilitate communication with other computing devices, such as the client computing devices and server computing devices described in detail below. The wireless network connections may include short range communication protocols such as BLUETOOTH, BLUETOOTH low energy (LE), cellular connections, as well as various configurations and protocols including the Internet, World Wide Web, intranets, virtual private networks, wide area networks, local networks, private networks using communication protocols proprietary to one or more companies, Ethernet, WiFi and HTTP, and various combinations of the foregoing.

The computing devices 110 may be part of an autonomous control system for the autonomous vehicle 100 and may be capable of communicating with various components of the vehicle in order to control the vehicle in an autonomous driving mode. For example, returning to FIGURE 1, the computing devices 110 may be in communication with various systems of the autonomous vehicle 100, such as deceleration system 160, acceleration system 162, steering system 164, signaling system 166, planning system 168, routing system 170, positioning system 172, perception system 174, behavior modeling system 176, and power system 178 in order to control the movement, speed, etc. of the autonomous vehicle 100 in accordance with the instructions 134 of memory 130 in the autonomous driving mode.

As an example, the computing devices 110 may interact with deceleration system 160 and acceleration system 162 in order to control the speed of the vehicle. Similarly, steering system 164 may be used by computing devices 110 in order to control the direction of the autonomous vehicle 100. For example, if the autonomous vehicle 100 is configured for use on a road, such as a car or truck, the steering system may include components to control the angle of wheels to turn the vehicle. The computing devices 110 may also use the signaling system 166 in order to signal the vehicle's intent to other drivers or vehicles, for example, by lighting turn signals or brake lights when needed.

Routing system 170 may be used by the computing devices 110 in order to generate a route to a destination using map information. Planning system 168 may be used by computing device 110 in order to generate short-term trajectories that allow the vehicle to follow routes generated by the routing system. In this regard, the planning system 168 and/or routing system 166 may store detailed map information, e.g., pre-stored, highly detailed maps identifying a road network including the shape and elevation of roadways, lane lines, intersections, crosswalks, speed limits, traffic signals, buildings, signs, real time traffic information (updated as received from a remote computing device, as such as the computing devices 410 discussed below or other computing devices), pullover spots, vegetation, or other such objects and information.

In addition to the aforementioned physical feature information, the map information may be configured as a roadgraph which includes a plurality of graph nodes and edges representing road or lane segments that together make up the road network of the map information. Each edge is defined by a starting graph node having a specific geographic location (e.g. latitude, longitude, altitude, etc.), an ending graph node having a specific geographic location (e.g. latitude, longitude, altitude, etc.), and a direction. This direction may refer to a direction the autonomous vehicle 100 must be moving in in order to follow the edge (i.e. a direction of traffic flow). The graph nodes may be located at fixed or variable distances. For instance, the spacing of the graph nodes may range from a few centimeters to a few meters and may correspond to the speed limit of a road on which the graph node is located. In this regard, greater speeds may correspond to greater distances between graph nodes. The edges may represent driving along the same lane or changing lanes. Each node and edge may have a unique identifier, such as a latitude and longitude location of the node or starting and ending locations or nodes of an edge. In addition to nodes and edges, the map may identify additional information such as types of maneuvers required at different edges as well as which lanes are drivable.

The routing system 166 may use the aforementioned map information to determine a route from a current location (e.g. a location of a current node) to a destination. Routes may be generated using a cost-based analysis which attempts to select a route to the destination with the lowest cost. Costs may be assessed in any number of ways such as time to the destination, distance traveled (each edge may be associated with a cost to traverse that edge), types of maneuvers required, convenience to passengers or the vehicle, etc. Each route may include a list of a plurality of nodes and edges which the vehicle can use to reach the destination. Routes may be recomputed periodically as the vehicle travels to the destination.

The map information used for routing may be the same or a different map as that used for planning trajectories. For example, the map information used for planning routes not only requires information on individual lanes, but also the nature of lane boundaries (e.g., solid white, dash white, solid yellow, etc.) to determine where lane changes are allowed. However, unlike the map used for planning trajectories, the map information used for routing need not include other details such as the locations of crosswalks, traffic lights, stop signs, etc., though some of this information may be useful for routing purposes. For example, between a route with a large number of intersections with traffic controls (such as stop signs or traffic signal lights) versus one with no or very few traffic controls, the latter route may have a lower cost (e.g. because it is faster) and therefore be preferable.

Positioning system 170 may be used by computing devices 110 in order to determine the vehicle's relative or absolute position on a map or on the earth. For example, the positioning system 170 may include a GPS receiver to determine the device's latitude, longitude and/or altitude position. Other location systems such as laser-based localization systems, inertial-aided GPS, or camera-based localization may also be used to identify the location of the vehicle. The location of the vehicle may include an absolute geographical location, such as latitude, longitude, and altitude, a location of a node or edge of the roadgraph as well as relative location information, such as location relative to other cars immediately around it which can often be determined with less noise that absolute geographical location.

The positioning system 172 may also include other devices in communication with the computing devices 110, such as an accelerometer, gyroscope or another direction/speed detection device to determine the direction and speed of the vehicle or changes thereto. By way of example only, an acceleration device may determine its pitch, yaw or roll (or changes thereto) relative to the direction of gravity or a plane perpendicular thereto. The device may also track increases or decreases in speed and the direction of such changes. The device's provision of location and orientation data as set forth herein may be provided automatically to the computing device 110, other computing devices and combinations of the foregoing.

The perception system 174 also includes one or more components for detecting objects external to the vehicle such as other vehicles, obstacles in the roadway, traffic signals, signs, trees, etc. For example, the perception system 174 may include LIDARs, sonar, radar, cameras and/or any other detection devices that record data which may be processed by the computing devices of the computing devices 110. In the case where the vehicle is a passenger vehicle such as a minivan, the minivan may include a laser or other sensors mounted on the roof or other convenient location.

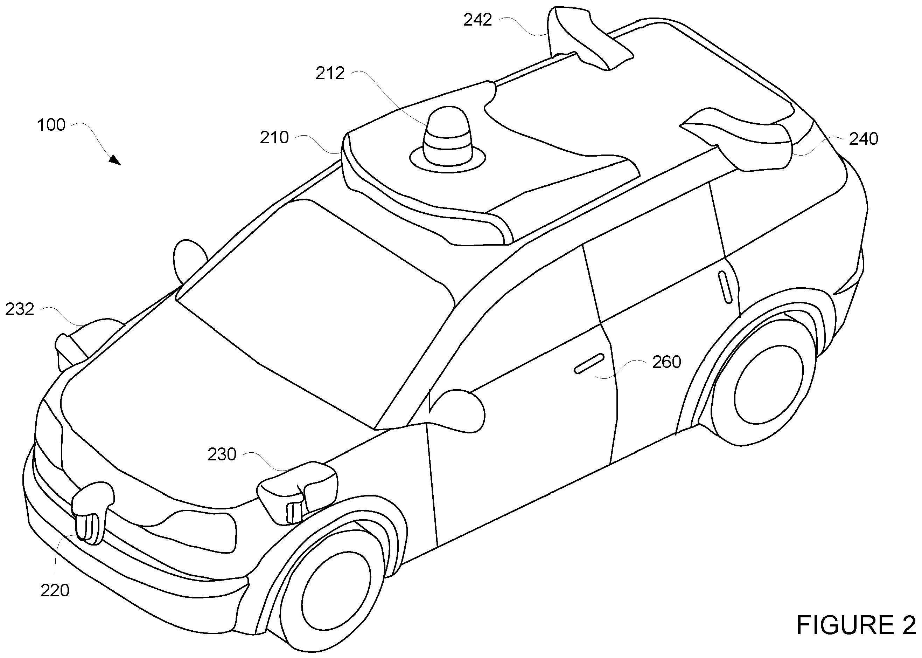

For instance, FIGURE 2 is an example external view of the autonomous vehicle 100. In this example, roof-top housing 210 and dome housing 212 may include a LIDAR sensor as well as various cameras and radar units. In addition, housing 220 located at the front end of the autonomous vehicle 100 and housings 230, 232 on the driver's and passenger's sides of the vehicle may each store a LIDAR sensor. For example, housing 230 is located in front of driver door 260. The autonomous vehicle 100 also includes housings 240, 242 for radar units and/or cameras also located on the roof of the autonomous vehicle 100. Additional radar units and cameras (not shown) may be located at the front and rear ends of the autonomous vehicle 100 and/or on other positions along the roof or roof-top housing 210.

The computing devices 110 may be capable of communicating with various components of the vehicle in order to control the movement of the autonomous vehicle 100 according to primary vehicle control code of memory of the computing devices 110. For example, returning to FIGURE 1, the computing devices 110 may include various computing devices in communication with various systems of the autonomous vehicle 100, such as deceleration system 160, acceleration system 162, steering system 164, signaling system 166, planning system 168, routing system 170, positioning system 172, perception system 174, behavior modeling system 176, and power system 178 (i.e. the vehicle's engine or motor) in order to control the movement, speed, etc. of the autonomous vehicle 100 in accordance with the instructions 134 of memory 130.

The various systems of the vehicle may function using autonomous vehicle control software in order to determine how to and to control the vehicle. As an example, a perception system software module of the perception system 174 may use sensor data generated by one or more sensors of an autonomous vehicle, such as cameras, LIDAR sensors, radar units, sonar units, etc., to detect and identify objects and their characteristics. These characteristics may include location, type, heading, orientation, speed, acceleration, change in acceleration, size, shape, etc. In some instances, characteristics may be input into a behavior prediction system software module of the behavior modeling system 176 which uses various behavior models based on object type to output a predicted future behavior for a detected object. In other instances, the characteristics may be put into one or more detection system software modules, such as a traffic light detection system software module configured to detect the states of known traffic signals, construction zone detection system software module configured to detect construction zones from sensor data generated by the one or more sensors of the vehicle as well as an emergency vehicle detection system configured to detect emergency vehicles from sensor data generated by sensors of the vehicle. Each of these detection system software modules may use various models to output a likelihood of a construction zone or an object being an emergency vehicle. Detected objects, predicted future behaviors, various likelihoods from detection system software modules, the map information identifying the vehicle's environment, position information from the positioning system 170 identifying the location and orientation of the vehicle, a destination location or node for the vehicle as well as feedback from various other systems of the vehicle may be input into a planning system software module of the planning system 168. The planning system 168 may use this input to generate trajectories for the vehicle to follow for some brief period of time into the future based on a route generated by a routing module of the routing system 170. In this regard, the trajectories may define the specific characteristics of acceleration, deceleration, speed, etc. to allow the vehicle to follow the route towards reaching a destination. A control system software module of the computing devices 110 may be configured to control movement of the vehicle, for instance by controlling braking, acceleration and steering of the vehicle, in order to follow a trajectory.

The computing devices 110 may control the vehicle in an autonomous driving mode by controlling various components. For instance, by way of example, the computing devices 110 may navigate the vehicle to a destination location completely autonomously using data from the detailed map information and planning system 168. The computing devices 110 may use the positioning system 170 to determine the vehicle's location and perception system 174 to detect and respond to objects when needed to reach the location safely. Again, in order to do so, computing device 110 and/or planning system 168 may generate trajectories and cause the vehicle to follow these trajectories, for instance, by causing the vehicle to accelerate (e.g., by supplying fuel or other energy to the engine or power system 178 by acceleration system 162), decelerate (e.g., by decreasing the fuel supplied to the engine or power system 178, changing gears, and/or by applying brakes by deceleration system 160), change direction (e.g., by turning the front or rear wheels of the autonomous vehicle 100 by steering system 164), and signal such changes (e.g., by lighting turn signals) using the signaling system 166. Thus, the acceleration system 162 and deceleration system 160 may be a part of a drivetrain that includes various components between an engine of the vehicle and the wheels of the vehicle. Again, by controlling these systems, computing devices 110 may also control the drivetrain of the vehicle in order to maneuver the vehicle autonomously.

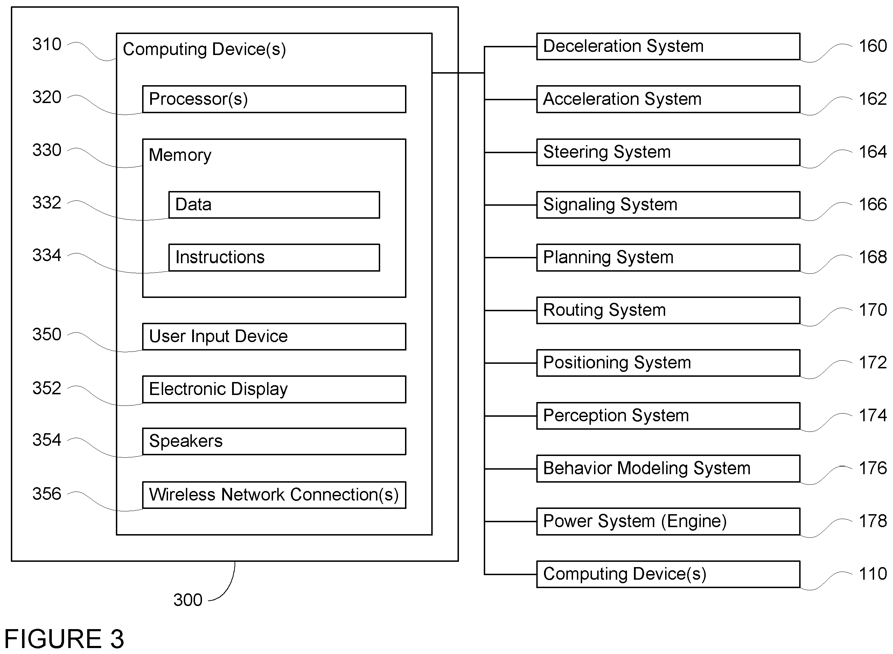

The autonomous vehicle 100 may also include a feedback system. For instance, turning to FIGURE 3, a feedback system 300 may include one or more computing devices 310 having one or more processors 320, memory 330, data 332, and instructions 334. Such processors, memories, data and instructions may be configured similarly to one or more processors 120, memory 130, data 132, and instructions 134 of computing device 110, respectively. The feedback system 300 may be in communication with the various systems of the autonomous vehicle 100, including the computing devices 110, deceleration system 160, acceleration system 162, steering system 164, signaling system 166, planning system 168, routing system 170, positioning system 172, perception system 174, behavior modeling system 176, power system 178, etc. Alternatively, the feedback system may be incorporated into or be a part of the computing devices 110.

Computing devices 310 may include user input device 350, electronic display 352, speakers 354, and wireless network connection 356. Each of these may be configured the same or similarly to user input device 150, electronic display 152, speakers 154, and wireless network connection 156 as described above. In other instances, these may be the same (i.e. need not all be duplicated between computing devices 110 and computing devices 310).

Computing devices 110 may also include one or more wireless network connections 156 to facilitate communication with other computing devices, such as the client computing devices and server computing devices described in detail below. The wireless network connections may include short range communication protocols such as BLUETOOTH, BLUETOOTH low energy (LE), cellular connections, as well as various configurations and protocols including the Internet, World Wide Web, intranets, virtual private networks, wide area networks, local networks, private networks using communication protocols proprietary to one or more companies, Ethernet, WiFi and HTTP, and various combinations of the foregoing.

In addition, the memory 330 and/or memory 130 may store information about feedback requests. Such information may include three primary features: triggering circumstances, display requirements, and data collection parameters. The triggering circumstances may include requirements such as driving events, presence or actions of other road users, trip state, roadgraph requirements, support interactions, user generated/initiated feedback, passenger lifecycle, time of day, other driving conditions (e.g. traffic or weather conditions), or combinations of these at once, over a predetermined period of time, or a predetermined number of times (e.g. 10 horn honks). Examples of driving events may include harsh braking, swerving or wiggling, certain accelerations (e.g. fast acceleration), disengages from an autonomous driving mode to a manual driving mode, etc. Examples of presence or actions of other road users may include situations with a single pedestrian, multiple pedestrians, single bicyclist, multiple bicyclists, a single scooter, multiple scooters, horn honking, being passed or overtaken by another road user, etc. Examples of trip state may include whether a ride is just after pickup or close to drop off, after the vehicle has begun moving after stopping for an emergency, after a trip has been cancelled, etc.

Road graph requirements may include certain types of intersections, unprotected turns, narrow streets, construction zones, disengage zones (where the autonomous vehicle will automatically disengage from an autonomous driving mode to a manual driving mode, or areas where pullovers are disallowed, etc. Examples of support interactions may include initiation of calls or chats between the passenger and a remote assistance operator by the passenger and/or the remote assistance operator. Examples of passenger lifecycle may include whether the passenger is on a particular ride number (e.g. first ride, 10th ride, etc.), a specific number of rides per week, a specific number of days or weeks between rides, a specific number of weeks since a first ride, etc.

Display requirements may define when a feedback request is to be displayed in order to capture the most useful feedback in a timely manner. In some instances, a default display requirement may be to display the feedback request immediately once the triggering circumstances have been met. The display requirement defines a delay time between the triggering circumstances having been met and displaying the feedback request. In other instances, the display requirement may define additional criteria, such as if there is an emergency situation and the autonomous vehicle is stopped, wait until the autonomous vehicle is moving again.

The data collection parameters may identify the information that the feedback request is to collect or rather, define the parameters for the information to be input into the feedback system, such as binary (yes/no), sliding scale, bucket responses (e.g. smiles to frowns to suggest pleasure or displeasure, etc.). In some instances, the data collection parameters of a feedback request may also differ based on the type of passenger and/or lifecycle. For instance, a feedback request for a more experienced passenger such as a passenger who has taken more rides, is taking unpaid rides for testing purposes, or has provided direct feedback on an event type before may receive a more direct question as compared to a less experienced rider. For example, following a harsh braking event, the feedback request could be more generic for a passenger with less experience (e.g. "how comfortable is the driving right now?") and more specific for a passenger with more experience (e.g. "how was that brake?").

Assuming a feedback request meets internal requirements for quality and usefulness (e.g. some internal standards), the feedback request is assigned a priority. In one instance, the priority corresponds to the inverse of a frequency with which the triggering circumstance is likely to occur. Lower frequency triggering circumstances may result in higher priorities and vice versa. This can be estimated from logged data. As another instance, the priority may correspond to the need for a particular type of data regardless of the frequency. For example, if needing to gauge the response of the vehicle to certain types of road users, such as responses to groups of children or families (e.g. children and adults together), such feedback requests may be assigned higher priority than other types of feedback requests.

The triggering circumstances, display requirements, and data collection parameters may be stored in a lookup table, database or other storage configuration of the memory 330 which allows one or more computing devices 310 of the feedback system to determine exactly when triggering circumstances have been met and then to identify any corresponding display requirements and data collection parameters.

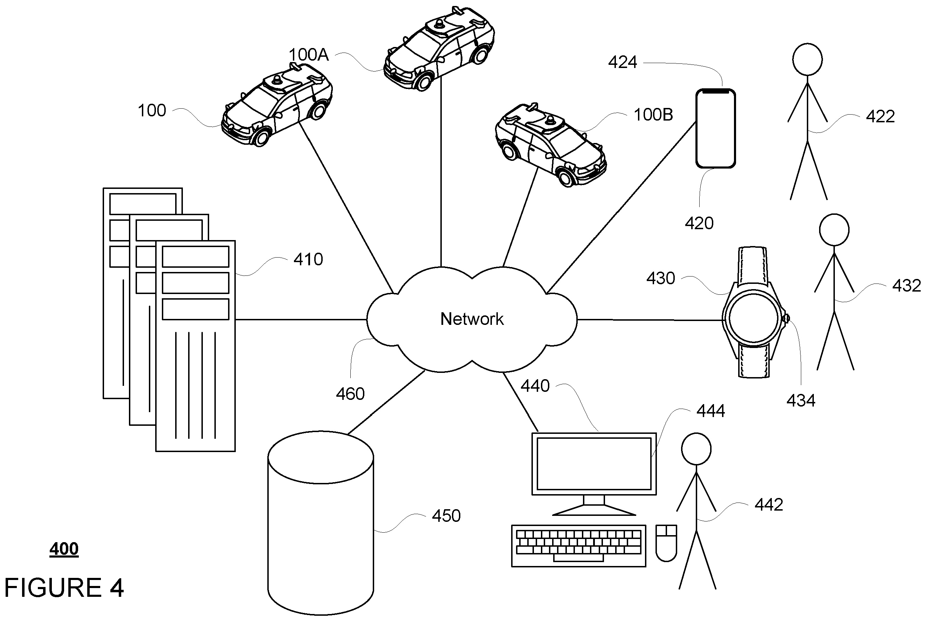

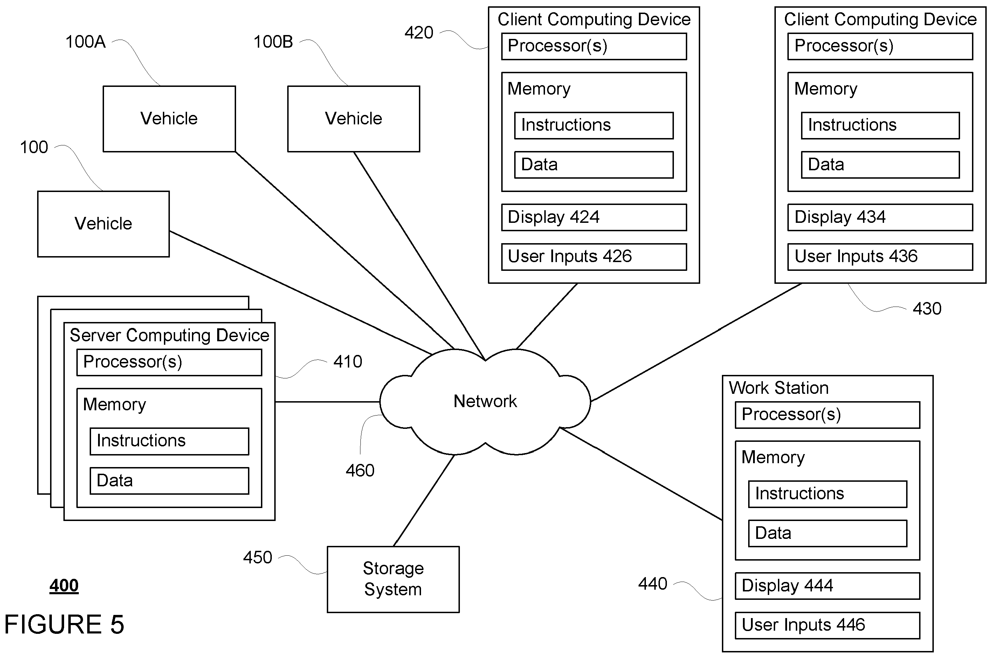

Computing devices 110 of the autonomous vehicle 100 may also receive or transfer information to and from other computing devices, such as those computing devices that are a part of the transportation service as well as other computing devices. FIGURES 4 and 5 are pictorial and functional diagrams, respectively, of an example system 400 that includes a plurality of computing devices 410, 420, 430, 440 and a storage system 450 connected via a network 460. System 400 also includes the autonomous vehicle 100A and the autonomous vehicle 100B, which may be configured the same as or similarly to the autonomous vehicle 100. Although only a few vehicles and computing devices are depicted for simplicity, a typical system may include significantly more.

As shown in FIGURE 5, each of computing devices 410, 420, 430, 440 may include one or more processors, memory, data and instructions. Such processors, memories, data and instructions may be configured similarly to one or more processors 120, memory 130, data 132, and instructions 134 of computing device 110.

The network 460, and intervening graph nodes, may include various configurations and protocols including short range communication protocols such as BLUETOOTH, BLUETOOTH LE, the Internet, World Wide Web, intranets, virtual private networks, wide area networks, local networks, private networks using communication protocols proprietary to one or more companies, Ethernet, WiFi and HTTP, and various combinations of the foregoing. Such communication may be facilitated by any device capable of transmitting data to and from other computing devices, such as modems and wireless interfaces.

In one example, one or more computing devices 410 may include one or more server computing devices having a plurality of computing devices, e.g., a load balanced server farm, that exchange information with different nodes of a network for the purpose of receiving, processing and transmitting the data to and from other computing devices. For instance, one or more computing devices 410 may include one or more server computing devices that are capable of communicating with computing device 110 of the autonomous vehicle 100 or a similar computing device of the autonomous vehicle 100A or the autonomous vehicle 100B as well as computing devices 420, 430, 440 via the network 460. For example, vehicles 100, 100A, 100B, may be a part of a fleet of vehicles that can be dispatched by server computing devices to various locations. In this regard, the server computing devices 410 may function as a fleet management system which can be used to arrange trips for passengers by assigning and dispatching vehicles such as vehicles 100, 100A, 100B. These assignments may include scheduling trips to different locations in order to pick up and drop off those passengers. In this regard, the server computing devices 410 may operate using scheduling system software in order to manage the aforementioned autonomous vehicle scheduling and dispatching. In addition, the computing devices 410 may use network 460 to transmit and present information to a user, such as user 422, 432, 442 on a display, such as displays 424, 434, 444 of computing devices 420, 430, 440. In this regard, computing devices 420, 430, 440 may be considered client computing devices.

As shown in FIGURE 4, each client computing device 420, 430 may be a personal computing device intended for use by a user 422, 432 and have all of the components normally used in connection with a personal computing device including a one or more processors (e.g., a central processing unit (CPU)), memory (e.g., RAM and internal hard drives) storing data and instructions, a display such as displays 424, 434, 444 (e.g., a monitor having a screen, a touch-screen, a projector, a television, or other device that is operable to display information), and user input device devices 426, 436, 446 (e.g., a mouse, keyboard, touchscreen or microphone). The client computing devices may also include a camera for recording video streams, speakers, a network interface device, and all of the components used for connecting these elements to one another.

Although the client computing devices 420, 430 may each comprise a full-sized personal computing device, they may alternatively comprise mobile computing devices capable of wirelessly exchanging data with a server over a network such as the Internet. By way of example only, client computing device 420 may be a mobile phone or a device such as a wireless-enabled PDA, a tablet PC, a wearable computing device or system, or a netbook that is capable of obtaining information via the Internet or other networks. In another example, client computing device 430 may be a wearable computing system, shown as a wristwatch as shown in FIGURE 4. As an example the user may input information using a small keyboard, a keypad, microphone, using visual signals with a camera, or a touch screen. As yet another example, client computing device 440 may be a desktop computing system including a keyboard, mouse, camera and other input devices.

Each of the client computing devices may be remote computing device used by a person (e.g. human operators or users 422, 432, 442) to review and analyze sensor data and other information generated by a perception system of a vehicle such as perception system 174 of the autonomous vehicle 100. Although only a few remote computing devices are shown in FIGURES 3 and 4, any number of such work stations may be included in a typical system.

As with memory 130, storage system 450 can be of any type of computerized storage capable of storing information accessible by the server computing devices 410, such as a hard-drive, memory card, ROM, RAM, DVD, CD-ROM, write-capable, and read-only memories. In addition, storage system 450 may include a distributed storage system where data is stored on a plurality of different storage devices which may be physically located at the same or different geographic locations. Storage system 450 may be connected to the computing devices via the network 460 as shown in FIGURES 4 and 5, and/or may be directly connected to or incorporated into any of the computing devices 110, 410, 420, 430, 440, etc.

Storage system 450 may store various types of information as described in more detail below. This information may be retrieved or otherwise accessed by a server computing device, such as one or more server computing devices 410, in order to perform some or all of the features described herein. For instance, storage system 450 may store log data. This log data may include, for instance, sensor data generated by a perception system, such as the perception system 174 of autonomous vehicle 100. The perception system may include a plurality of sensors that generate sensor data. As an example, the sensor data may include raw sensor data as well as data identifying defining characteristics of perceived objects (including other road users) such as shape, location, orientation, speed, etc. of objects such as vehicles, pedestrians, bicyclists, vegetation, curbs, lane lines, sidewalks, crosswalks, buildings, etc. The log data may also include "event" data identifying different types of events such as collisions or near collisions with other objects, planned trajectories describing a planned geometry and/or speed for a potential path of the autonomous vehicle 100, actual locations of the vehicles at different times, actual orientations/headings of the vehicle at different times, actual speeds, accelerations and decelerations of the vehicle at different times (and/or changes in speed, orientation/heading/steering angle, acceleration, etc. over time), classifications of and responses to perceived objects, behavior predictions of perceived objects, status of various systems (such as acceleration, deceleration, perception, steering, signaling, routing, power, etc.) of the vehicle at different times including logged errors, inputs to and outputs of the various systems of the vehicle at different times, etc. As such, these events and the sensor data may be used to "recreate" the vehicle's environment, including perceived objects, and behavior of a vehicle in a simulation.

At least some of this log data may be "ride data," that is, log data generated during a particular trip or ride taken by a passenger in an autonomous vehicle such as the autonomous vehicle 100. Ride data may include all of the aforementioned features of the log data or may include only specific types of data such as motion planning commands from a vehicle's planning system (such as planning system 168), telemetry from the vehicle, context from the map information used to control the vehicle, processed or raw sensor data for other road users (such as vehicles, bicyclists, pedestrians, etc.) from the vehicle's perception system (such as perception system 174), acceleration information, jerk (or the derivative of acceleration) information, etc. Ride data may also be associated with ride feedback provided by one or more passengers for a particular ride. At least some of this feedback may be provided by a passenger in response to, for instance during or immediately after, an unpleasant event as discussed further below. In addition or alternatively, the feedback may include an overall ride quality value after a ride has been completed as discussed further below.

### EXAMPLE METHODS

In addition to the operations described above and illustrated in the figures, various operations will now be described. It should be understood that the following operations do not have to be performed in the precise order described below. Rather, various steps can be handled in a different order or simultaneously, and steps may also be added or omitted.

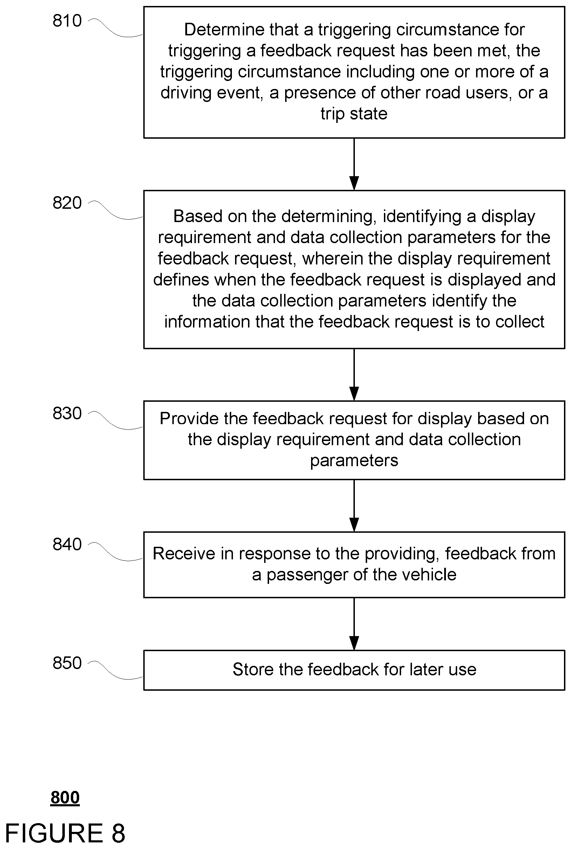

FIGURE 8 includes an example flow diagram 800 of some of the examples for collecting feedback from passengers of autonomous vehicles which may be performed, for example, by one or more processors of a feedback system of an autonomous vehicle, such as the processors 320 of the feedback system 300 of the autonomous vehicle 100 and/or the processors 120 of the computing devices 110. For instance, at block 810, that a triggering circumstance for triggering a feedback request has been met is determined. The triggering circumstance including one or more of a driving event, a presence of other road users, or a trip state.

The computing devices 310 of the feedback system 300 may monitor information from various systems of the autonomous vehicle 100. For instance, the computing devices of the feedback system may constantly analyze roadgraph features and location information from the autonomous vehicle's positioning system 172, route and trajectory features from the autonomous vehicle's routing system 170 and planning system 168, detected objects and characteristics (e.g. status such as yellow light, pedestrian in a crosswalk, etc.) from the autonomous vehicle's perception system 174, as well as behavior predictions (e.g. predicted trajectories) from the autonomous vehicle's behavior modeling system 176, etc. Based on this, the feedback system may determine when a triggering circumstance as defined in the memory 330 occurs.

At block 820, based on the determining, a display requirement and data collection parameters are determined for the feedback request. The display requirement defines when the feedback request is displayed and the data collection parameters identify information that the feedback request is to collect. For instance, one a triggering circumstance is identified in the memory 330 and/or memory 130, the computing devices 310 may identify any associated display requirements and data collection parameters.

At block 830, the feedback request is provided for display based on the display requirement and data collection parameters. Once a triggering circumstance occurs, the computing devices of the feedback system can generate and display an interface for the user. This can be displayed on a display of the vehicle, such as display 152 or display 352 or potentially a passenger's client computing device (e.g. client computing device 420) by sending the feedback request to the passenger's client computing device over a network such as network 460. The feedback request may be displayed with or without an audible notification (e.g. a "ding").

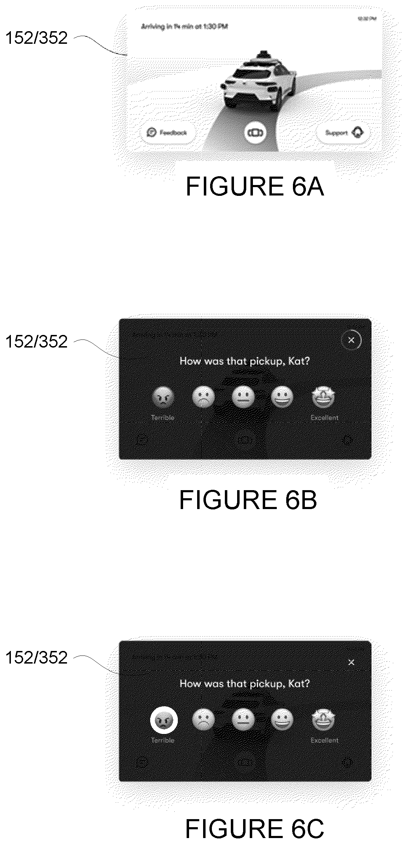

FIGURES 6A-6I provide an example representation of information which may be displayed on display 152 or 352 during a trip by the computing devices 110 and/or 310. In the example of FIGURE 6A, after a passenger has initiated a trip to a destination, depicts an informational screen that indicates that the autonomous vehicle 100 is on its way to a destination. FIGURE 6B depicts an example representation of a feedback request which may be displayed after the example of FIGURE 6A. In this example, the feedback request of FIIGURE 6B includes a request for information ("How was that pickup, Kat?") as well as a plurality of options (angry face, frowning face, a neutral face, and smiling faces) for a user to provide feedback. In this example, the feedback request has been customized to include the name of the passenger ("Kat") though this may not be necessary.

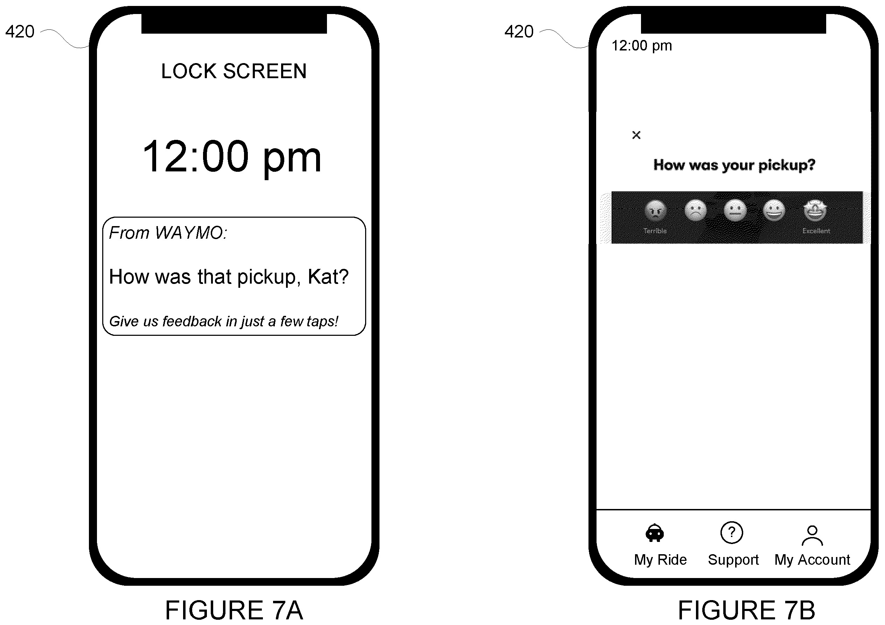

FIGURES 7A and 7B provide an example of how a feedback request may be displayed at a passenger's client computing device. In FIGURE 7A, the feedback request is initially displayed as a notification on a "lock screen" of the passenger's client computing device 420. Once the passenger has opened the notification, the rest of the feedback request is displayed.

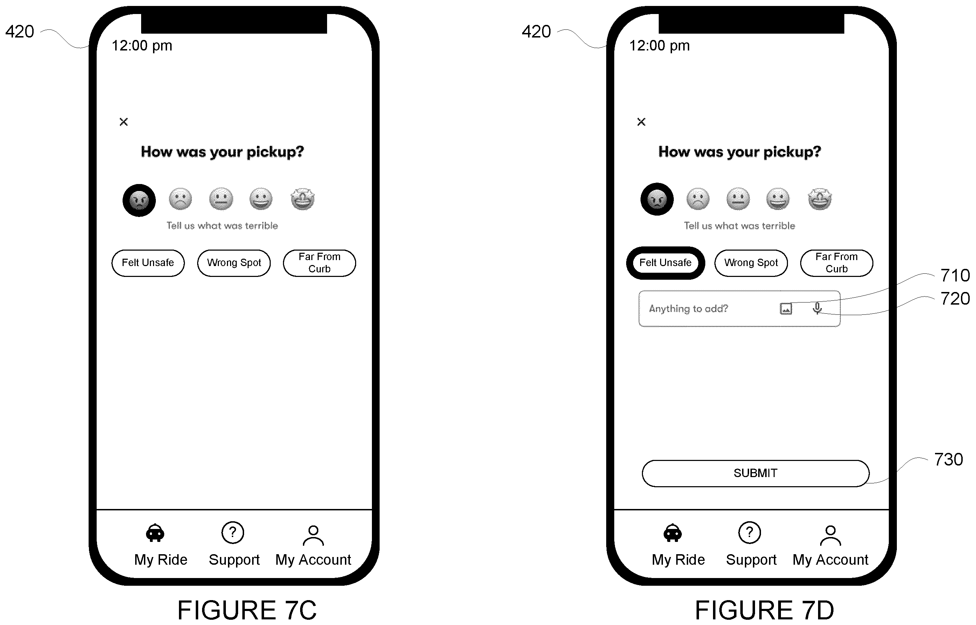

As indicated above, the plurality of options may be defined by the data collection parameters of the feedback request. In the Example of FIGURE 6C, the passenger may have selected an angry face (here "terrible"), for instance using a touch-screen or another user input device of the vehicle (e.g. user input device 150). As shown in FIGURE 6C and 7C, the computing devices 110 and/or 310 may automatically highlight the selected option.

However, as noted above when the feedback request is displayed is dependent upon the display requirement for that feedback request. In this regard, the display requirement may identify how soon after the triggering condition is met that the feedback request is displayed. As an example, a display requirement could be "15 seconds after entering a narrow lane," "immediately after exiting an intersection," etc. Certain feedback requests may be more suitable for one type of input (e.g. voice for vehicle and text for phone).

In some instances, there may be multiple feedback requests to be displayed at the same time or within a short period of time. For example, within a 10 second period of time, the feedback system may determine that triggering conditions have been met for two or more different feedback requests. The priority may allow the feedback system to select the most important of those requests to display to the user, at the expense of the other requests. In addition or alternatively, lower priority requests could potentially be delayed to later in the ride.

At block 840, in response to the providing, feedback is received from a passenger of the vehicle. For instance, the passenger may provide feedback via the user input device 150 and/or the user input device 350 or by way of the user input devices of the passenger's client computing device. If a client computing device is used (e.g. the passenger's mobile phone), the feedback may be sent to the vehicle (e.g. via a BLUETOOTH, BLUETOOTH low energy (LE), near field communication, via network 460, or other communication protocol) or may be sent to a server computing device (such as server computing devices 410) and subsequently forwarded by the server computing device to the client computing device of the passenger (e.g. computing device 420).

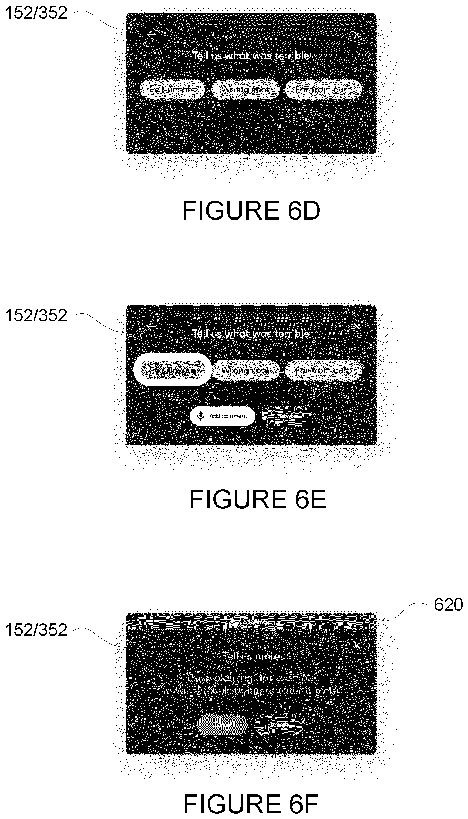

In some instances, the feedback request may include multiple "layers" of feedback requests for information in order to collect as much information as possible about a passenger's experience. In other words, depending upon a passenger's responses, additional feedback requests may be displayed. For instance, turning to FIGURE 6D and FIGURE 7C, a second feedback request ("Tell us what was terrible") may be displayed in response to the user selecting the frowning face in FIGURE 6C or 7C, respectively. This second feedback request may also include a plurality of options ("felt unsafe", "wrong spot", and "far from curb") again defined by the data collection parameters of the second feedback request. In this example, the passenger may select the "felt unsafe" option, shown as highlighted in FIGURE 6E.

As shown in FIGURES 6E, once the passenger has provided feedback to the second feedback request (or potentially the initial feedback request as depicted in FIGUER 6B), the computing devices 110 and/or 310 may provide additional options such as "add comment" which may allow a passenger to record and submit an audible or video message as well as a "submit" option which may allow a passenger to submit the responses to the feedback requests. Similarly, as shown in FIGURE 7D, the client computing device 420 may display a text box ("Anything to add") for a user to provide text as well as additional options to provide an image or an audio recording (option 710 and option 720, respectively). FIGURE 7D also provides an option 730 to submit the passenger's feedback.

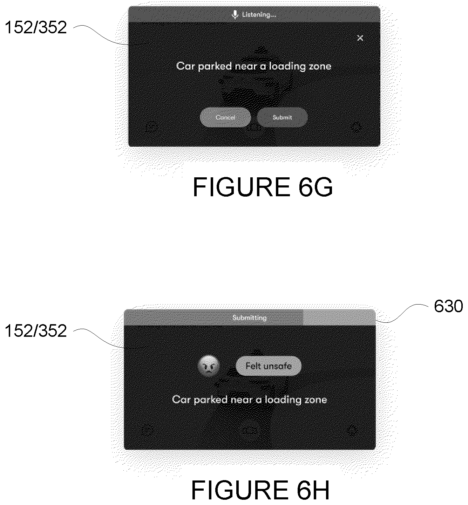

For instance, in the example of FIGURES 6F and 6G, audio is being recorded ("listening") as indicated by notification 620. This example also provides some guidance to the passenger ("Try explaining, for example 'it was difficult trying to enter the car'") with additional options to "cancel" the audible recording or to "submit" the audible recording. In the example of FIGURE 6G, the computing devices 110 and/or 310 have transcribed the audible message and displayed it on the display again with additional options to "cancel" the audible recording or to "submit" the audible recording.

At block 850, the feedback is stored for later use. Feedback results may be received and stored, for instance in the memory 130 and/or in the memory 330, for later analysis and/or automatically transmitted to a fleet management system for storage and later analysis. In this regard, the feedback may be sent to the server computing devices 410 for storage in the storage system 450. Once the passenger has selected any of the aforementioned the submit options, as shown in FIGURE 6H, the computing devices 110 and/or 310 may provide a summary of the feedback provided by the user as well as an indication 630, that the feedback is being submitted (e.g. stored for later use and/or automatically transmitted). Once submitted and/or after an appropriate period of time has passed, the display 152 and/or 352 may return to the informational screen in FIGURE 6A that indicates that the autonomous vehicle 100 is on its way to a destination or another informational screen.

In some instances, a triage team may review the feedback and create a notification (e.g. a bug) for the human operator who initially requested the feedback or another entity. In addition, the triage team may be more quickly/effectively able to root cause the issue given an accurate timestamp of when it occurred (e.g. "a car just cut us off a few seconds ago" as compared to "sometime in my 20-minute ride a car cut us off").

**In** some instances, the feedback may be used in real time to affect driving behaviors of the autonomous vehicles. For example, if a passenger has a strong negative reaction to a moment when an autonomous vehicle accelerates rapidly to make an unprotected turn or some other maneuver, the autonomous vehicle could be controlled more conservatively from that point on, optimizing less for time/routing efficiency and potentially even avoiding the offending maneuver. As another example, if a passenger reports a negative pickup experience in real time, the fleet management system may be able to disable that pickup location for all of the other autonomous vehicles in the fleet and avoid other bad pickups in the area, for instance, at least until the reason for the negative pickup experience can be determined.

Feedback requests can also have frequency and also passenger defined limits. For instance, each trip may have a fixed maximum number of feedback requests displayed or this may vary depending upon the length of the trip. In some instances, the number of feedback requests for a particular trip may vary depending on the passenger's past history of providing responses (e.g. more responses by this passenger during past trips corresponds to more feedback requests on the current trip). In some instances, machine learning approaches may be used to determine the number and frequency of feedback requests displayed during a trip based on different groups or type of passengers. For example, passengers who are testing the vehicle may be expected to provide more feedback than a paid passenger. Moreover, passengers who are their first ride (newer passenger), 10th ride, or 100th ride (seasoned passenger) may be expected to provide different types, amounts and quality of feedback. These frequency requirements may be associated with the triggering circumstances and stored in the memory 130 and/or 330 as well.

**In** some instances, a passenger may "silence" or request no additional feedback requests "of this kind" or "at all." For instance, a passenger could make the changes by electing to silence feedback at the start of the trip, either via the user input device 150 or from the passenger's own client computing device (e.g. mobile phone), indicating that the passenger does not want to be disturbed for the duration of the trip. A passenger may also respond to a specific feedback request using one of those channels, electing to pause that kind or type of feedback or to pause feedback for the duration of the trip. The passenger may also be able to select preferences for feedback across trips (e.g., in account settings via the passenger's client computing device, which could be during a trip but doesn't have to be, or via the vehicle's user input devices). This preference information may be sent to the computing devices 110 and/or 310 in order to control the frequency of (or even just completely silence) requests for the current trip. In addition, the preference information may be sent to a server computing device, such as the server computing devices 410, in order to store preferences for future feedback requests with account information of the passenger. Again, if a client computing device is used (e.g. the passenger's mobile phone), the preference information may be sent to the vehicle (e.g. via BLUETOOTH, BLUETOOTH low energy (LE), near field communication or other communication protocol) or may be first sent to a server computing device (such as server computing devices 410) and subsequently forwarded by the server computing device to the computing devices of the vehicle (e.g. computing devices 110 and/or 310).

The features described herein may allow autonomous vehicles to collect feedback from passengers in real time as events which are important to stakeholders are occurring. As a result, feedback may be more accurate and even more useful as it is not simply collected after a trip has been completed. For instance, passengers will have just experienced the event so will have a better memory of it than later in the trip. In addition, other negative or positive events later in a ride will not affect the passenger's feedback for the current event. Moreover, some passengers may have a better experience if they are asked for feedback a few times over the course of a ride as compared to several questions all at once at the end of a ride (when the passenger may be less likely to recall the answers correctly).

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method of collecting feedback from passengers of autonomous vehicles, the method comprising:
determining, by one or more processors (120) of a feedback system of an autonomous vehicle (100), that a triggering circumstance for triggering a feedback request has been met, the triggering circumstance including one or more of a driving event, a presence of other road users, or a trip state;
based on the determining, by the one or more processors, identifying a display requirement and data collection parameters for the feedback request, wherein,
the display requirement defines a delay time between the triggering circumstance having been met and displaying the feedback request so as to define when the feedback request is displayed, and
the data collection parameters identify information that the feedback request is to collect;
providing, by the one or more processors, the feedback request for display based on the display requirement and data collection parameters;
receiving, by the one or more processors, in response to the providing, feedback from a passenger of the autonomous vehicle; and
storing, by the one or more processors, the feedback for later use.

2. The method of claim 1, wherein the driving event includes disengaging from an autonomous driving mode to a manual driving mode.

3. The method of claim 1 or 2, wherein the presence of other road users includes a predefined number of pedestrians.

4. The method of any of claims 1-3, wherein the presence of other road users includes a predefined number of bicyclists.

5. The method of any preceding claim, wherein the trip state includes time from a pickup of the passenger; and/or wherein the trip state includes time from a drop off of the passenger.

6. The method of any preceding claim, wherein the triggering circumstance further includes a rider lifecycle requirement.

7. The method of claim 6, wherein the rider lifecycle requirement includes:
whether the passenger is on a particular ride number; and/or
whether the passenger has made a particular number of rides in a week; and/or
whether the passenger has had a predefined amount of time between rides; and/or
whether the passenger has had a predefined number of weeks since a first ride.

8. The method of any preceding claim, wherein the triggering circumstance further includes a support interaction requirement.

9. The method of any preceding claim, wherein the display requirement includes a vehicle action which must occur before the feedback request is displayed.

10. The method of any preceding claim, further comprising based on the determining, identifying a priority for the feedback request, wherein the priority corresponds to an inverse of a frequency with which the triggering circumstance is likely to occur.

11. The method of any preceding claim, further comprising using a priority of the feedback request to determine when to display the feedback request.

12. The method of any preceding claim, wherein the providing includes providing for display on a display of the autonomous vehicle; and/or wherein the providing includes providing for display on a display (424, 434, 444) of a client computing device (420, 430, 440) associated with the passenger.

13. The method of any preceding claim, further comprising, based on the determining, identifying a frequency limit for the feedback request, and wherein the providing is further based on the frequency limit.

14. The method of claim 13, wherein the frequency limit includes a fixed maximum number of feedback requests displayed during a trip.

15. Computer executable instructions which, when executed by one or more processors (120) of a feedback system of an autonomous vehicle (100), cause the one or more processors to perform the method of any preceding claim.

## Patentansprüche

1. Verfahren zum Sammeln von Rückkopplung von Passagieren von autonomen Fahrzeugen, wobei das Verfahren Folgendes umfasst:
Bestimmen, durch einen oder mehrere Prozessoren (120) eines Rückkopplungssystems eines autonomen Fahrzeugs (100), dass ein steuernder Umstand zum Steuern einer Rückkopplungsanforderung erfüllt worden ist, wobei der steuernde Umstand eines oder mehrere von einem Fahrereignis, einer Anwesenheit von anderen Straßenbenutzern oder einem Tourzustand beinhaltet;
basierend auf dem Bestimmen, durch den einen oder die mehreren Prozessoren, Identifizieren einer Anzeigeanforderung und von Datensammlungsparametern für die Rückkopplungsanforderung, wobei
die Anzeigeanforderung eine Verzögerungszeit zwischen dem Erfüllen des steuernden Umstands und dem Anzeigen der Rückkopplungsanforderung definiert, um zu definieren, wann die Rückkopplungsanforderung angezeigt wird, und
die Datensammlungsparameter Informationen identifizieren, welche die Rückkopplungsanforderung sammeln soll;
Bereitstellen, durch den einen oder die mehreren Prozessoren, der Rückkopplungsanforderung zur Anzeige basierend auf der Anzeigeanforderung und den Datensammlungsparametern;
Empfangen, durch den einen oder die mehreren Prozessoren, als Reaktion auf das Bereitstellen, von Rückkopplung von einem Passagier des autonomen Fahrzeugs; und
Speichern, durch den einen oder die mehreren Prozessoren, der Rückkopplung zur späteren Benutzung.

2. Verfahren nach Anspruch 1, wobei das Fahrereignis Trennen von einem autonomen Fahrmodus in einen manuellen Fahrmodus beinhaltet.

3. Verfahren nach Anspruch 1 oder 2, wobei die Anwesenheit von anderen Straßenbenutzern eine vordefinierte Anzahl an Fußgängern beinhaltet.

4. Verfahren nach einem der Ansprüche 1-3, wobei die Anwesenheit von anderen Straßenbenutzern eine vordefinierte Anzahl an Radfahrern beinhaltet.

5. Verfahren nach einem vorhergehenden Anspruch, wobei der Tourzustand Zeit von einer Abholung des Passagiers beinhaltet; und/oder wobei der Tourzustand Zeit von einem Absetzen des Passagiers beinhaltet.

6. Verfahren nach einem vorhergehenden Anspruch, wobei der steuernde Umstand ferner eine Fahrerlebenszyklusanforderung beinhaltet.

7. Verfahren nach Anspruch 6, wobei die Fahrerlebenszyklusanforderung Folgendes beinhaltet:
ob der Passagier auf einer bestimmten Fahrtnummer ist; und/oder
ob der Passagier eine bestimmte Anzahl an Fahrten in einer Woche unternommen hat; und/oder
ob der Passagier eine vordefinierte Menge an Zeit zwischen Fahrten gehabt hat; und/oder
ob der Passagier eine vordefinierte Anzahl an Wochen seit einer ersten Fahrt gehabt hat.

8. Verfahren nach einem vorhergehenden Anspruch, wobei der steuernde Umstand ferner eine Stützinteraktionsanforderung beinhaltet.

9. Verfahren nach einem vorhergehenden Anspruch, wobei die Anzeigeanforderung eine Fahrzeugaktion beinhaltet, die stattfinden muss, bevor die Rückkopplungsanforderung angezeigt wird.

10. Verfahren nach einem vorhergehenden Anspruch, ferner umfassend basierend auf dem Bestimmen Identifizieren einer Priorität für die Rückkopplungsanforderung, wobei die Priorität einem Inversen einer Frequenz entspricht, mit welcher der steuernde Umstand wahrscheinlich auftreten wird.

11. Verfahren nach einem vorhergehenden Anspruch, ferner umfassend Benutzen einer Priorität der Rückkopplungsanforderung, um zu bestimmen, wann die Rückkopplungsanforderung anzuzeigen ist.

12. Verfahren nach einem vorhergehenden Anspruch, wobei das Bereitstellen Bereitstellen zur Anzeige auf einer Anzeige des autonomen Fahrzeugs beinhaltet; und/oder wobei das Bereitstellen Bereitstellen zur Anzeige auf einer Anzeige (424, 434, 444) einer Client-Rechenvorrichtung (420, 430, 440), die dem Passagier zugeordnet ist, beinhaltet.

13. Verfahren nach einem vorhergehenden Anspruch, ferner umfassend, basierend auf dem Bestimmen, Identifizieren einer Frequenzgrenze für die Rückkopplungsanforderung, und wobei das Bereitstellen ferner auf der Frequenzgrenze basiert.

14. Verfahren nach Anspruch 13, wobei die Frequenzgrenze eine feste maximale Anzahl an Rückkopplungsanforderungen beinhaltet, die während einer Tour angezeigt werden.

15. Computerausführbare Anweisungen, die, wenn durch einen oder mehrere Prozessoren (120) eines Rückkopplungssystems eines autonomen Fahrzeugs (100) ausgeführt, den einen oder die mehreren Prozessoren veranlassen, das Verfahren nach einem vorhergehenden Anspruch durchzuführen.

## Revendications

1. Procédé de collecte de rétroaction provenant de passagers de véhicules autonomes, le procédé comprenant :
la détermination, par un ou plusieurs processeurs (120) d'un système de rétroaction d'un véhicule autonome (100), du fait qu'une circonstance de déclenchement pour déclencher une demande de rétroaction a été satisfaite, la circonstance de déclenchement comprenant un ou plusieurs parmi un événement de conduite, une présence d'autres usagers de la route ou un état de trajet ;
sur la base de la détermination, par les un ou plusieurs processeurs, l'identification d'une exigence d'affichage et de paramètres de collecte de données pour la demande de rétroaction, dans lequel
l'exigence d'affichage définit un délai entre le moment où la circonstance de déclenchement a été satisfaite et l'affichage de la demande de rétroaction de façon à définir le moment où la demande de rétroaction est affichée, et
les paramètres de collecte de données identifient des informations que la demande de rétroaction doit collecter ;
la fourniture, par les un ou plusieurs processeurs, de la demande de rétroaction pour affichage sur la base de l'exigence d'affichage et de paramètres de collecte de données ;
la réception, par les un ou plusieurs processeurs, en réponse à la fourniture, de rétroaction provenant d'un passager du véhicule autonome ; et
le stockage, par les un ou plusieurs processeurs, de la rétroaction pour une utilisation ultérieure.

2. Procédé de la revendication 1, dans lequel l'événement de conduite comprend le fait de quitter un mode de conduite autonome pour un mode de conduite manuelle.

3. Procédé de la revendication 1 ou 2, dans lequel la présence d'autres usagers de la route comprend un nombre prédéfini de piétons.

4. Procédé de l'une quelconque des revendications 1 à 3, dans lequel la présence d'autres usagers de la route comprend un nombre prédéfini de cyclistes.

5. Procédé d'une quelconque revendication précédente, dans lequel l'état de trajet comprend un temps à partir d'une prise en charge du passager ; et/ou dans lequel l'état de trajet comprend un temps à partir d'une dépose du passager.

6. Procédé d'une quelconque revendication précédente, dans lequel la circonstance de déclenchement comprend en outre une exigence de cycle de vie de voyageur.

7. Procédé de la revendication 6, dans lequel l'exigence de cycle de vie de voyageur comprend :
si le passager se situe sur un numéro de voyage particulier ; et/ou
si le passager a effectué un nombre particulier de voyages au cours d'une semaine ; et/ou
si une quantité prédéfinie de temps s'est écoulé entre les voyages du passager ; et/ou
si un nombre prédéfini de semaines se sont écoulées depuis un premier voyage du passager.

8. Procédé d'une quelconque revendication précédente, dans lequel la circonstance de déclenchement comprend en outre une exigence d'interaction de support.

9. Procédé d'une quelconque revendication précédente, dans lequel l'exigence d'affichage comprend une action de véhicule qui doit se produire avant que la demande de rétroaction soit affichée.

10. Procédé d'une quelconque revendication précédente, comprenant en outre, sur la base de la détermination, l'identification d'une priorité pour la demande de rétroaction, dans lequel la priorité correspond à un inverse d'une fréquence à laquelle la circonstance de déclenchement est susceptible de se produire.

11. Procédé d'une quelconque revendication précédente, comprenant en outre l'utilisation d'une priorité de la demande de rétroaction pour déterminer le moment où afficher la demande de rétroaction.

12. Procédé d'une quelconque revendication précédente, dans lequel la fourniture comprend la fourniture pour affichage sur un affichage du véhicule autonome ; et/ou dans lequel la fourniture comprend la fourniture pour affichage sur un affichage (424, 434, 444) d'un dispositif informatique client (420, 430, 440) associé au passager.

13. Procédé d'une quelconque revendication précédente, comprenant en outre, sur la base de la détermination, l'identification d'une limite de fréquence pour la demande de rétroaction, et dans lequel la fourniture est en outre basée sur la limite de fréquence.

14. Procédé de la revendication 13, dans lequel la limite de fréquence comprend un nombre maximum fixe de demandes de rétroaction affichées pendant un trajet.

15. Instructions exécutables par ordinateur qui, lorsqu'elles sont exécutées par un ou plusieurs processeurs (120) d'un système de rétroaction d'un véhicule autonome (100), amènent les un ou plusieurs processeurs à réaliser le procédé d'une quelconque revendication précédente.
